# EUROPEAN PATENT APPLICATION

(11) **EP 1 850 587 A2**
(43) Date of publication of application: **31.10.2007**
(21) Application number: 07106716.9
(22) Date of filing: 23.04.2007
(51) Int. Cl.: H04N 5/445

(54) **Digital broadcast receiving apparatus and control method thereof**

(30) Priority: 28.04.2006 JP 2006125015
(71) Applicant: Canon Kabushiki Kaisha, Ohta-Ku, Tokyo 146-8501 (JP)
(72) Inventor: Minobe, Miyako, Ohta-ku, Tokyo (JP)
(74) Representative: Sharp, Alan Cooper

(57) **Abstract**

A digital broadcast receiving apparatus receives a broadcast signal, and displays a picture corresponding to the broadcast signal on a display screen. The digital broadcast receiving apparatus includes an extraction unit (102) configured to extract information about a closed caption and genre information about a genre of a program from the broadcast signal, and a selection unit (115) configured to select a display form of the closed caption on the basis of the genre information.

## Description

### BACKGROUND OF THE INVENTION

### Field of the Invention

The present invention relates to a digital broadcast receiving apparatus, and more particularly, to closed-caption display in digital television broadcasting.

### Description of the Related Art

A transmission protocol used in digital television broadcasting conforms to the operational standard set by Association of Radio Industries and Businesses (ARIB). According to the ARIB standard, video and audio signals are transmitted by an MPEG (Moving Picture Coding Experts Group) 2-TS (Transport Stream) system. When transmitted on broadcast waves, signals are multiplexed in a multiplexing format called a transport stream (TS). A TS includes 188-byte data packets into which a PES (Packetized Elementary Stream) is divided. Each of the packets in the TS includes a 32-bit header, and 13-bit information, called a packet identifier (PID), which indicates the attribute or attributes of the packet.

In digital television broadcasting, closed-caption information is transmitted in a plurality of TS packets having the same PID number, in a manner similar to that used for video and audio data. A closed caption includes a service provided synchronously to main video and audio data (e.g., a translated subtitle), and a service provided asynchronously to main video and audio data (e.g., a news flash).

A TS mainly contains packets of PSI (Program Specific Information) serving as basic information for program selection, and SI (Service Information) serving as supplementary information about programs. SI contains an EIT (Event Information Table) that includes information about the names, contents, and genres of programs. The EIT can be used by a receiver side for program search and channel selection.

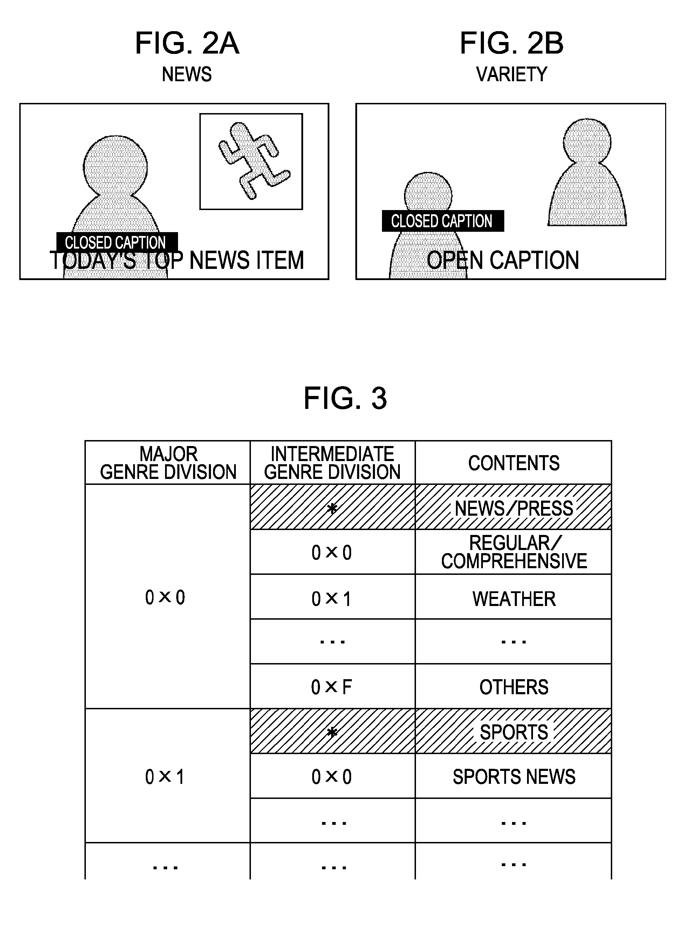

When a closed caption contained in the broadcast wave is not properly displayed on a screen, as shown in FIG. 2A, it overlaps with an open caption in the contents. This hinders viewing.

Closed-caption information contains not only character codes and font sizes, but also information about the display coordinates on the screen. By decoding the information on the receiver side, a closed caption can be displayed in a manner designed by the program creator.

However, in contents in which open captions are heavily used, for example, a variety program, a closed caption is frequently displayed near the center of the screen so as not to overlap with an open caption, as shown in FIG. 2B. This interferes with viewing of the viewer because a main picture is normally displayed near the center of the screen.

Further, since closed captions are produced and transmitted in real time in a live program such as a news program, it is difficult to optimize the display position and timing of the closed captions. For example, the displayed closed caption sometimes overlaps with an open caption contained in the picture. In this case, the open caption is hidden under the closed caption, and is not viewed by the viewer.

In contents in which open captions are heavily used, it is known to reduce the interference with viewing of the viewer by displaying a motion picture in a reduced size preset in the receiver. This technique is disclosed in ARIB TR-B14, Operational Guidelines for Digital Terrestrial Television Broadcasting.

Further, Japanese Patent Laid-Open No. 2004-208014 discloses that a display position of an open caption is detected and a display position of a closed caption is changed in accordance with the detected position of the open caption in contents in which a closed caption is produced and transmitted in real time.

Unfortunately, in the closed-caption screen-out display function disclosed in the above guidelines, the picture is displayed in a reduced size, and this reduces image definition.

In the above patent publication, closed-caption data and closed-caption display position information contained in PES data and display position information about an open caption contained in picture signals are analyzed by image recognition. The closed-caption data and the display position are corrected, and the correction is reflected in the picture, thereby preventing the closed caption from overlapping with the open caption. For this reason, depending on the corrected position, the closed caption is displayed closer to the center of the motion picture, and it is difficult to sufficiently avoid interference with viewing. Moreover, since image recognition is performed, the scale of the circuit is increased.

### SUMMARY OF THE INVENTION

The present invention provides a digital broadcast receiving apparatus as specified in claims 1 to 6.

Since the layout of closed captions can be changed so as to be optimum for the genre of broadcast contents, it is not always necessary to reduce the size of a display picture. That is, pictures in the broadcast contents can be viewed without reducing definition, and viewing is prevented from being interfered by the displayed closed captions.

Further, the layout of the closed caption is determined on the basis of the genre of the contents that are on air. Therefore, it is possible to optimize the display position and timing of closed captions even in contents in which closed captions are produced and transmitted in real time.

In addition, image recognition is not indispensable. This can reduce the scale of the circuit.

The present invention in its second aspect provides a control method for a digital broadcast receiving apparatus as specified in claim 7.

Further features of the present invention will become apparent from the following description of exemplary embodiments with reference to the attached drawings.

### BRIEF DESCRIPTION OF THE DRAWINGS

FIG. 1 is a block diagram of a digital broadcast receiving apparatus according to an embodiment of the present invention.

FIGS. 2A and 2B are explanatory views showing examples of conventional displayed closed captions.

FIG. 3 is an explanatory view showing the format of genre information.

FIG. 4 is a flowchart showing a process performed in the embodiment of the present invention.

FIGS. 5A to 5D are explanatory views showing examples of displayed closed captions according to an embodiment of the present invention.

FIG. 6 is an explanatory view showing a method for producing a motion-vector table according to an embodiment of the present invention.

### DESCRIPTION OF THE EMBODIMENTS

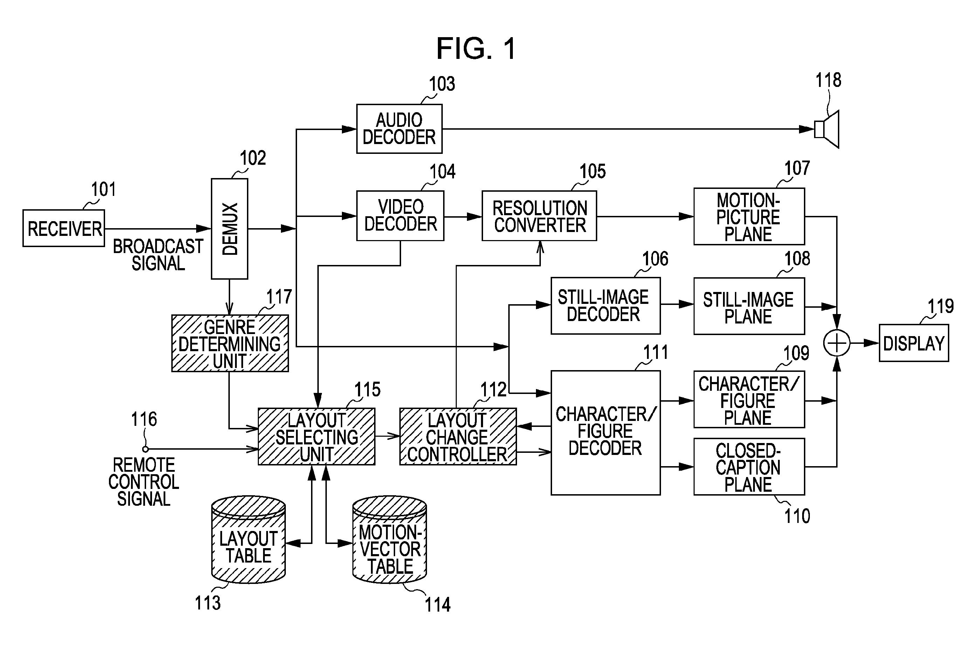

A digital broadcast receiving apparatus according to an embodiment of the present invention will be specifically described below with reference to FIG. 1.

A digital broadcast signal is received by a tuner 101. Instead of the digital broadcast signal, a streaming or server type broadcast signal delivered by the Internet can be received by the tuner 101.

An MPEG2-TS is input from the tuner 101 to a demultiplexer 102 serving as the extraction unit. The MPEG2-TS contains information packets such as PSI and SI as well as packets of video and audio data and closed-caption information. The demultiplexer 102 divides the TS packets into a video packet, an audio packet, data packets, a PSI packet, and a SI packet according to packet identifiers (PID) provided in headers of the respective packets.

The audio packet is transmitted to an audio decoder 103, and is subjected to MPEG2-AAC decoding so as to generate an audio signal. Voice based on the audio signal is output from a speaker 118.

The video packet is transmitted to a video decoder 104, and is subjected to MPEG2 decoding so as to reproduce a video signal. The reproduced video signal is appropriately subjected to resolution conversion by a resolution converter 105. A motion-picture plane 107 is assigned as a display plane.

The data packet for a still picture and the data packet for a closed caption are respectively transmitted to a still-image decoder 106 and a character/figure decoder 111, and are subjected to decoding. A still-image plane 108, a character/figure plane 109, and a closed-caption plane 110 are assigned as display planes. Data on the planes are subjected to combination including alpha blending. A picture based on the combined picture data is displayed on a screen of a display 119.

The demultiplexer 102 extracts an EIT from the SI (service information) packet, and transmits the EIT to a genre determining unit 117. The genre determining unit 117 determines a genre of a program that is on air, according to genre information in the EIT. The EIT contains not only information about the name and contents of the program, but also genre information about the program. The genre information can be used for display and genre search. FIG. 3 shows an example of a format of genre information. In the genre information, predetermined codes are respectively assigned to major divisions and intermediate divisions. Predetermined codes may be assigned only to major divisions. The genre information is commonly controlled among digital terrestrial broadcasting, BS digital broadcasting, and broadband CS digital broadcasting.

A layout selecting unit 115 receives the genre information from the genre determining unit 117, and motion vectors of a motion picture from the video decoder 104.
The layout selecting unit 115 selects a layout corresponding to the genre from a layout table, and a layout corresponding to the motion vectors from a motion-vector table. These tables are respectively stored as information about the display form of a closed caption corresponding to the genre information in storage means 113 and 114. These storage means 113 and 114 may be formed of separate memories, or of different storage regions in the same memory.

A method for generating the layout table will now be described.

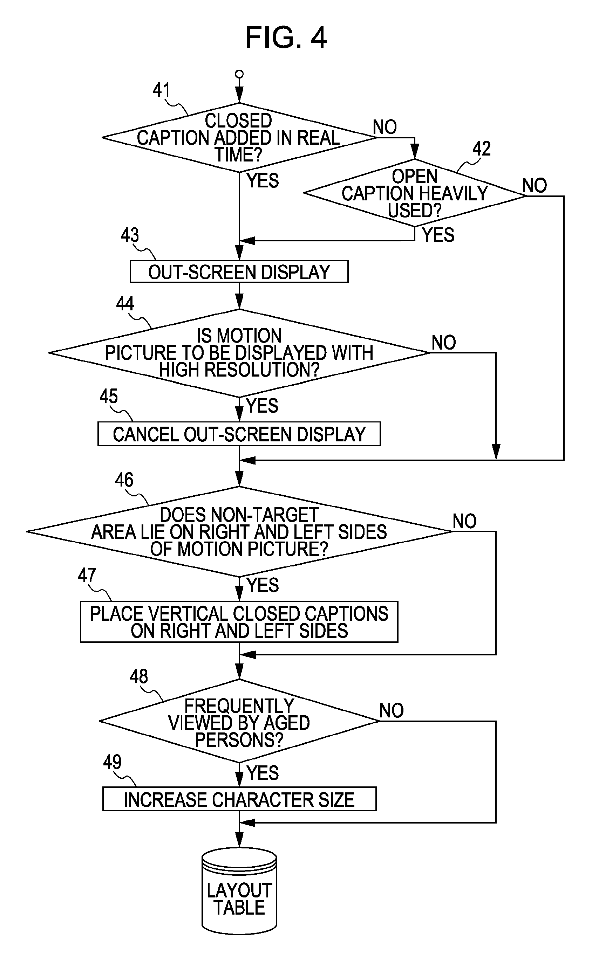

In a layout table, optimum closed-caption display positions are held beforehand in association with genres of broadcasting contents. The optimum closed-caption display position for a genre is determined on the basis of parameters, for example, the tendency of the manner in which contents of the genre are displayed on the screen and requests from the viewer. For example, the following five parameters may represent the characteristics of the genre. That is, it is determined whether closed-captions are frequently added in real time, whether open captions are heavily used, whether many contents require motion pictures to be displayed with high resolution, whether a target region is frequently displayed in the center of the screen, and whether contents of the genre are frequently viewed by older persons (e.g. people over 45). Priorities are assigned to these five parameters, and a layout change position is determined for each genre according to a flowchart shown in FIG. 4.

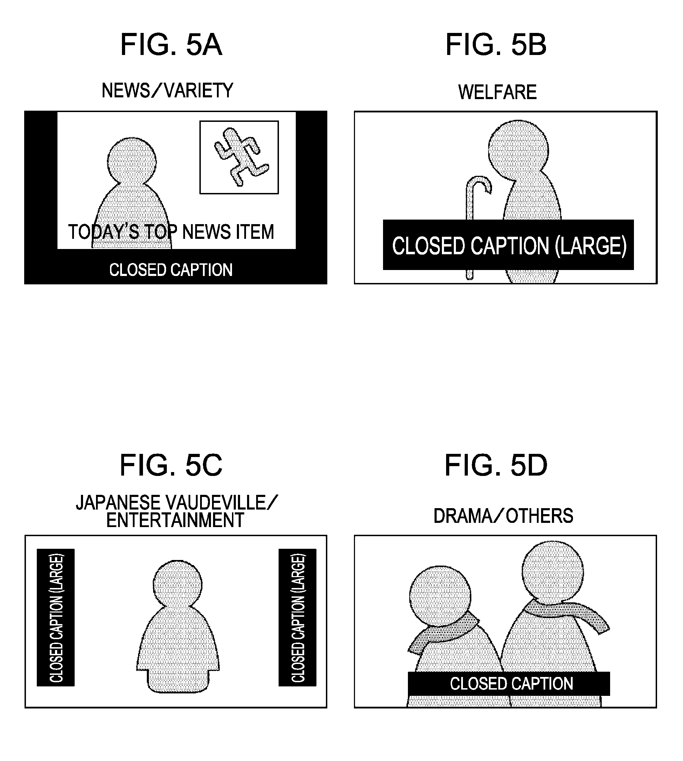

For example, closed captions are added in real time in a news program (Step 41), and open captions are heavily used in a variety program (Step 42), and therefore, an out-screen display is set (Step 43). Out-screen means a display in which a picture is displayed in a smaller size than normal and a closed caption is displayed outside the picture so that the picture and the closed caption do not overlap on the display screen. Since programs of both genres do not need to be displayed with high resolution (Step 44), it is unnecessary to cancel a reduction display mode of a motion picture. Further, since a target region is not provided (Step 46) and the program is not frequently viewed by older persons (Step 48), closed captions are displayed in a picture non-display region obtained by resolution conversion without changing the character size. A display example in this case is shown in FIG. 5A.

When contents of the genre are frequently viewed by older persons (Step 48), the size of characters in the displayed closed caption is increased (Step 49).

In a Japanese vaudeville/entertainment program, closed-captions are not added in real time (Step 41), and open captions are not heavily used (Step 42), and therefore, an out-screen display is not performed. Since a request for viewing the program with high quality does not seem to be so strong, resolution conversion of a picture motion is not performed. Since a target region seems to be frequently provided in the center of the screen (Step 46), the layout is changed so that closed captions are displayed on the right and left sides of the screen (Step 47). Moreover, since this program is frequently viewed by older persons (Step 48), the character size used in the closed captions is increased (Step 49). A display example in this case is shown in FIG. 5C.

In a genre such as a drama, determination is not performed on the basis of any of the above-described five parameters (Steps 41, 42, 44, 56, and 48). Therefore, a program of this genre is output in a standard manner prescribed by the broadcasting station (FIG. 5D).

The items, number, and priorities of the parameters may be arbitrarily determined in design.

In this way, the display form of a closed caption is determined on the basis of at least one of the picture display form of a program belonging to each genre and the tendency (e.g. statistically determined likely preferences) of the viewer. This allows the optimum display form of the closed caption to be selected for each content.

Incidentally, one program content sometimes belongs to a plurality of genres. For example, when the content is a "documentary drama", genre information added to the content sometimes belongs to major divisions "drama" and "documentary/culture". When intermediate divisions are also considered, the program content is sometimes defined as belonging to more genres.

A description will now be given of a method for setting a closed-caption display form when a plurality of pieces of genre information are given to one content.

Genres and the appearance ratios of motion vectors are pre-stored in association with each other in a motion-vector table. This allows the optimum genre to be selected from a plurality of genres given to the content. A method for generating a motion-vector table will be described below.

When a picture signal corresponding to a certain genre is received, an image is divided into a plurality of areas. In this case, the image is to be displayed in a motion-picture plane having no closed caption.

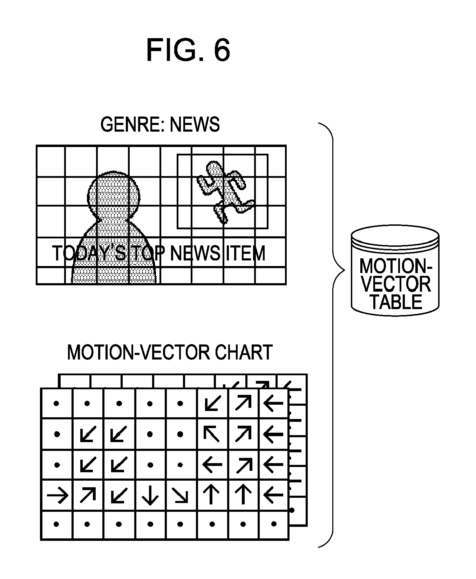

In each of the divided areas, motion vectors of the picture signal are obtained at regular intervals. The distribution of motion vectors in one picture is obtained for a predetermined period, and the tendency of characteristic motion vectors that appear at regular intervals is put in a table in association with the genre. A plurality of pieces of distribution information about motion vectors may be provided corresponding to one genre (FIG. 6). Alternatively, a plurality of small areas may be connected, and a representative motion vector may be produced as motion distribution information. For example, since open captions are changed at regular intervals in a news program, the appearance interval of motion vectors indicating the open captions is stored in association with the genre. When the layout of the closed captions is set, the optimum genre for the contents can be selected on the basis of the tendency of motion vectors of the motion picture.

Referring again to FIG. 1, the layout selecting unit 115 may cancel the layout change in response to a signal from a remote-control-signal input device 116 so as to return the layout to a layout designated by the signal transmission side.

According to instructions from the layout selecting unit 115, a layout change controller 112 appropriately changes the display method for closed-caption data received from the character/figure decoder 111. Consequently, a closed caption is displayed on the television screen so as not to interfere with viewing of the program and so as not to overlap with an open caption.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A digital broadcast receiving apparatus for receiving a broadcast signal and displaying an image corresponding to the broadcast signal on a display, the digital broadcast receiving apparatus comprising:
extraction means (102) configured to extract information about a closed caption and genre information of a program from the broadcast signal; and
selection means (115) configured to select a display form of the closed caption on the basis of the genre information.

2. The digital broadcast receiving apparatus according to claim 1,
wherein the display form of the closed caption is predetermined on the basis of at least one of a) an image display form in the program belonging to the genre, and b) a tendency of viewers, and
wherein the digital broadcast receiving apparatus further includes:
storage means (113, 114) configured to store the determined display form of the closed caption as information corresponding to the genre information.

3. The digital broadcast receiving apparatus according to claim 1, wherein the selection means selects the display form of the closed caption on the basis of the genre information and motion vectors of a picture signal obtained by decoding means (104) configured to decode the broadcast signal in the case of a program having a plurality of pieces of genre information.

4. The digital broadcast receiving apparatus according to any preceding claim, wherein the determination of the display form of the closed caption is to determine at least one of a display position of the closed caption on the display screen, a character size of the closed caption, and setting of an out-screen display.

5. The digital broadcast receiving apparatus according to claim 4, wherein the character size of the closed caption is increased when the program belonging to the genre is mainly viewed by older persons.

6. The digital broadcast receiving apparatus according to claim 4, wherein the display form of the closed caption is determined so that the closed caption does not overlap with an open caption on the display.

7. A method for controlling a digital broadcast receiving apparatus that receives a broadcast signal and displays an image corresponding to the broadcast signal, the method comprising the steps of:
extracting information about a closed caption and genre information about a program from the broadcast signal; and
selecting a display form of the closed caption on the basis of the genre information.
